# EUROPÄISCHE PATENTSCHRIFT

(11) **EP 2 034 120 B1**
(45) Veröffentlichungstag und Bekanntmachung des Hinweises auf die Patenterteilung: **29.07.2015**
(21) Anmeldenummer: 08405218.2
(22) Anmeldetag: 08.09.2008
(51) Int. Cl.: B65D 83/68, B65D 83/14, C09K 21/14, E06B 5/16, B65D 83/30

(54) **Ausrüstung für Feuerschutzabschlüsse**
Equipment for fire protection closures
Equipement pour fermetures coupe-feu

(30) Priorität: 10.09.2007 DE 102007042657
(43) Veröffentlichungstag der Anmeldung: 11.03.2009
(73) Patentinhaber: Colux GmbH, 78224 Singen (DE)
(72) Erfinder: Lechner, Roland, Dr., 78224 Singen (DE)
(74) Vertreter: Rottmann, Maximilian

(56) Entgegenhaltungen:
- DE-A1- 19 937 835
- DE-U1-202007 002 712
- FR-A1- 2 701 286

## Beschreibung

Die Erfindung betrifft eine Ausrüstung für Feuerschutzabschlüsse nach dem Oberbegriff des Anspruchs 1 sowie eine Brandschutztürenanordnung nach dem Oberbegriff des Anspruchs 10.

Bei den nach dem Stand der Technik ausgebildeten Brandschutztürenanordnungen, welche neben der eigentlichen Tür eine Türzarge umfassen, werden die Zargen üblicherweise ausgemörtelt. Ohne Maschine ist das sehr zeitaufwändig und umständlich und darum teuer. Weil es so umständlich ist, wird in der Praxis oftmals nicht korrekt gearbeitet, die Zargen sind also mehr oder weniger hohl. Der Brandschutz ist dann nicht gegeben. Darum wäre es wünschenswert, wenn man eine Ausrüstung zur Verfügung hätte, mit welcher man die Zarge auf einfache Weise brandsicher machen könnte.

Das Dokument FR 2 701 286 A1 offenbart eine Brandschutztürenanordnung mit allen Merkmalen des Oberbegriffs des Anspruchs 1.

Ausgehend von dem genannten Stand der Technik besteht die Aufgabe der Erfindung darin, Feuerschutzabschlüsse wie Brandschutztürenanordnungen und dergleichen vorzuschlagen, welche die Brandschutzsicherheit von Brandschutztürenanordnungen sicherzustellen, ohne dass die Türzargen mit Mörtel ausgefüllt werden müssen, wobei insbesondere sichergestellt werden soll, dass über die Zarge über einen längeren Zeitraum weder Feuer noch Rauch den Brandraum verlassen können.

Die Aufgabe der Erfindung besteht darin, eine Zarge sowie eine schwenkbar daran gelagerte Tür umfassende Brandschutztürenanordnung vorzuschlagen, bei welcher sichergestellt ist, dass über die Zarge über einen längeren Zeitraum weder Feuer noch Rauch den Brandraum verlassen könnten.

Diese Aufgabe wird mit einer Brandschutztürenanordnung gelöst, welche mit einer der alternativ im Kennzeichen des Anspruchs 1 definierten Merkmalskombinationen versehen ist.

Bevorzugte Weiterbildungen der Ausrüstung sind in den abhängigen Ansprüchen 2 bis 7 definiert.

So wird bei einem bevorzugten Ausführungsbeispiel vorgeschlagen, dass die Ausrüstung ein Intumeszenzmaterial zum Anbringen auf der Unterseite der Tür sowie ein aufschäumbares Füllmaterial, auf der Basis von Polyurethan, Silikon, Silikat, Acryl oder einer Epoxid-Verbindung umfasst.

Es hat sich nämlich gezeigt, dass es bei der Verwendung eines Intumeszenzmaterials genügt, den oder die verbleibenden Hohlräume mit einem aufgeschäumten Füllmaterial zu füllen.

Jedenfalls kann durch das sich unter Wärmeeinwirkung dreidimensional ausdehnende Intumeszenzmaterial sichergestellt werden, dass über die Zarge und/oder den zwischen der Unterseite der Tür und dem Boden bestehenden Spalt weder Feuer noch Rauch über einen längeren Zeitraum den Brandraum verlassen können. Das Intumeszenzmaterial kann z.B. aus Platten, Bändern, Streifen von der Rolle und dgl. bestehen. Auch Schäume, die bei Wärmeeinwirkung ihr Volumen vergrößern, werden als Intumeszenzmaterial verstanden.

Bei einer Alternative, welche nicht Bestandteil der beanspruchten Erfindung ist, wird kein Intumeszenzmaterial verwendet und umfasst die Ausrüstung einen als Aerosoldose ausgebildeten Behälter, der mit zwei unabhängigen, mit unterschiedlichen Komponenten gefüllten Kammern versehen ist, wobei die eine Kammer mit einer ersten Komponente zur Bildung eines Brandschutzschaums und die andere Kammer mit einer die Aushärtung des ausgetragenen Brandschutzschaums beschleunigenden zweiten Komponente gefüllt ist. Mit einer solchen Dose kann ein Brandschutzschaum schnell, einfach und sicher in die Zarge eingebracht und/oder auf der Unterseite der Tür angebracht werden.

In der Kammer zur Bildung des Brandschutzschaums befindet sich beispielsweise eine Mischung aus Isocyanat, bevorzugt Diphenylmethan-4,4'-diisocyanat, mindestens ein Flammschutzmittel wie beispielsweise Tris(2-chlorisopropyl)-phosphat und mindestens ein Treibgas.

In der anderen Kammer zur beschleunigten Härtung des eigentlichen Brandschutzschaums befindet sich beispielsweise ein Polyol und Kaliumazetat. Falls der Innenbehälter aus flexiblem Material gefertigt ist, muss er kein Treibgas enthalten.

Die Erfindung wird nachfolgend anhand von Zeichnungen näher erläutert. Dabei zeigt:
- Fig. 1: eine schematische Ansicht einer nach dem Stand der Technik ausgebildeten Brandschutztürenanordnung;
- Fig. 2: die Brandschutztürenanordnung in einem Schnitt entlang der Linie A-A in Fig. 1;
- Fig. 3: die Brandschutztürenanordnung in einem Schnitt entlang der Linie B-B in Fig. 1;
- Fig. 4: einen Querschnitt durch eine Mauer und eine daran befestigte Zarge;
- Fig. 5 und 5a: einen Quer- und Längsschnitt durch eine Brandschutztürenanordnung mit einer ersten möglichen Kombination von Brandschutzmassnahmen;
- Fig. 6 und 6a,: einen Quer- und Längsschnitt durch eine Brandschutztürenanordnung mit einer alternativen möglichen Kombination von Brandschutzmaßnahmen, welche nicht Teil der beanspruchten Erfindung sind;
- Fig. 7 und 7a,: einen Quer- und Längsschnitt durch eine Brandschutztürenanordnung mit einer weiteren möglichen Kombination von Brandschutzmaßnahmen, welche nicht Teil der beanspruchten Erfindung sind;
- Fig. 8: den unteren Abschluss einer mit einem Intumeszenzmaterial versehenen Tür;
- Fig. 9: eine Variante der Tür gemäss Fig. 8;
- Fig. 10: eine weitere Variante der Tür gemäss Fig. 8;
- Fig. 11: einen Schnitt durch eine mit einem Intumeszenzmaterial versehene Türzarge;
- Fig. 12: einen Schnitt durch eine mit einem Intumeszenzmaterial sowie einem Füllmaterial versehene Türzarge;
- Fig. 13: den unteren Abschluss der Tür gemäss Fig. 5 nach einem Brand.
- Fig. 14: eine zur Aufnahme eines 2-K Brandschutzmaterials ausgebildete Aerosoldose;

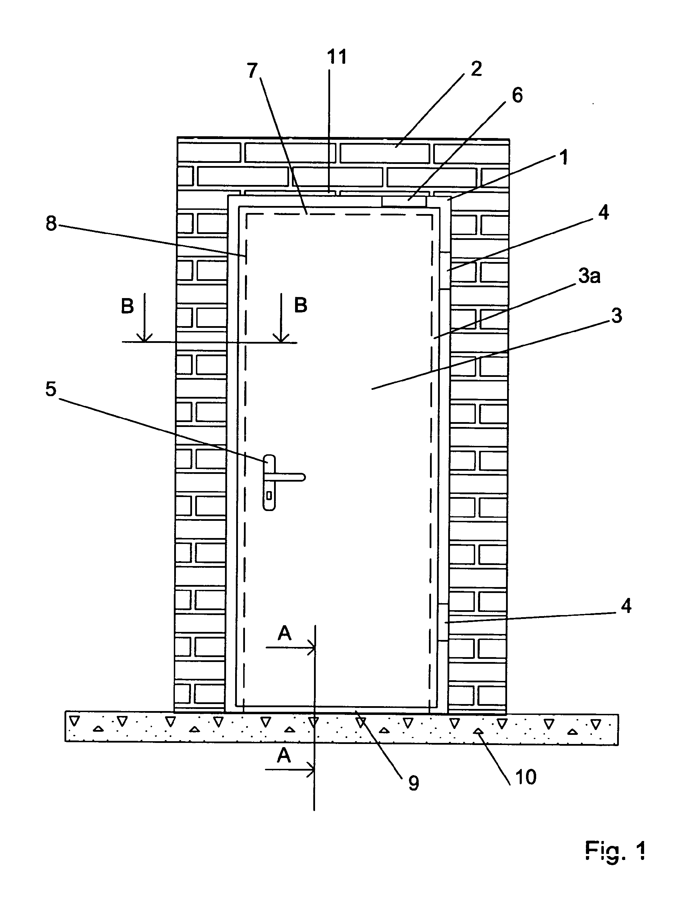

Die Fig. 1 zeigt eine schematische Ansicht einer Brandschutztürenanordnung nach dem Stand der Technik. Die Brandschutztürenanordnung umfasst neben der eigentlichen Brandschutztür 3 eine Zarge 1, Bänder 4, eine Drückergamitur 5 sowie ein Schließmittel 6.

Die Zarge 1 ist mit dem Mauerwerk 2 verschraubt und ausgemörtelt. Das äußere Türblatt 3a ist mittels den Bändern 4 mit der Zarge 1 verbunden. Das Schloss mit Drückergarnitur 5 verschließt die Tür. Das Schließmittel 6 sorgt für das Selbstschließen der Tür. Das äußere Türblatt 3a überlappt die Zarge 1, so dass sich die lichte Durchgangshöhe 7 und die lichte Durchgangsbreite 8 ergibt. Zwischen dem unteren Ende der Tür 3 und dem Boden 10 besteht ein Luftspalt 9. Falls sich die Tür im Brandfall aufbiegt, entsteht auf der Oberseite ebenfalls ein Luftspalt 11.

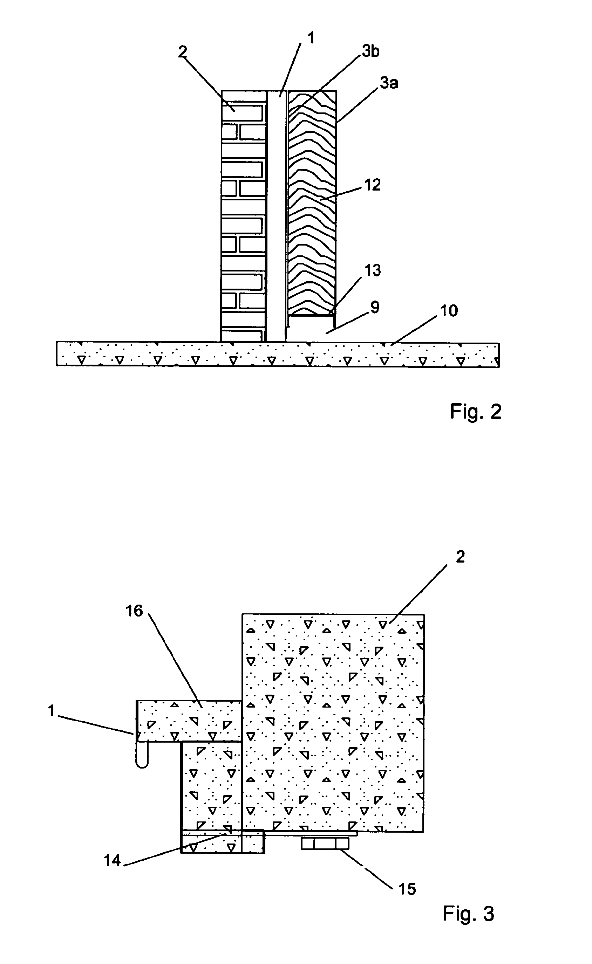

Fig. 2 zeigt den unteren Abschnitt der Brandschutztürenanordnung in einem schematischen Schnitt entlang der Linie A-A in Fig. 1. Im geschlossenen Zustand liegt das innere Türblatt 3b an der Zarge 1 an. Zwischen den Türblättern 3a und 3b ist die Dämmung 12. Die Zarge 1 ist mit dem Mauerwerk 2 verschraubt und ausgemörtelt. Am unteren Ende der Türblätter 3a und 3b ist ein Abschluss 13 in Form z.B. eines U-Profils angebracht. Zwischen dem Abschluss 13 und dem Boden 10 verbleibt der genannte untere Luftspalt 9.

Fig. 3 zeigt einen Querschnitt durch die Brandschutztürenanordnung entlang der Linie B-B in Fig. 1. Die Zarge 1 ist mittels der Lasche 14 und der Schraube 15 mit dem Mauerwerk 2 verschraubt. Der Hohlraum zwischen Zarge 1 und Mauerwerk 2 ist mit Mörtel 16 gefüllt. Die Tür ist nicht dargestellt. Eine solche, nach dem Stand der Technik ausgebildete Brandschutztürenanordnung kann einen Brandversuch deshalb bestehen, weil sich das anorganische, nicht brennbare Mörtelmaterial nicht zersetzt und auch keine brennbaren Gase bildet.

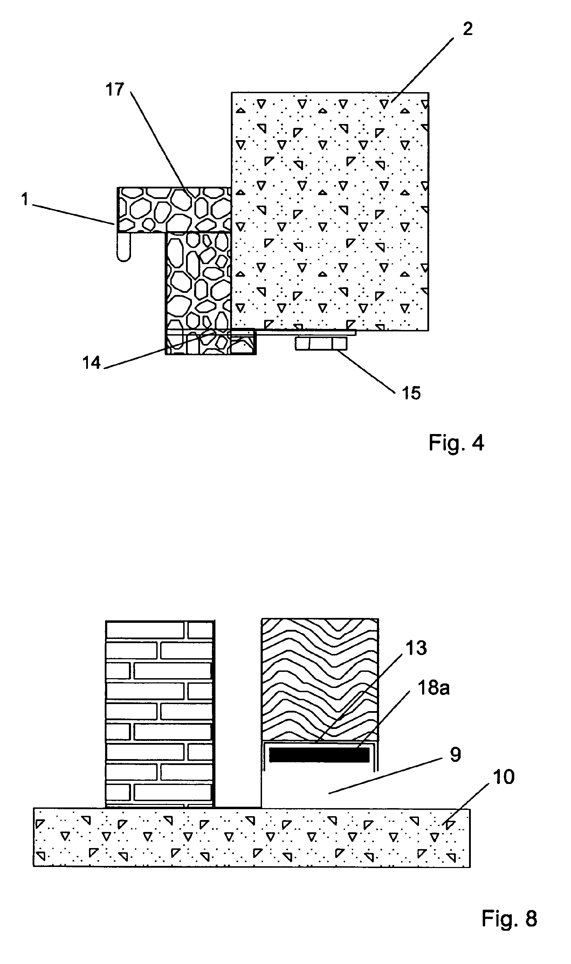

Fig. 4 zeigt einen Querschnitt durch die Brandschutztürenanordnung wobei die Zarge 1 anstelle von Mörtel mit einem PU-Montageschaum 17 gefüllt ist.

Ein Brandversuch mit der Befestigungsvariante nach Fig. 4 hat ergeben, dass der Brandschutz nicht gegeben war. Nach DIN 4102 Teil 5 muss die raumabschließende Wirkung eines Feuerschutzabschlusses gewahrt bleiben. Damit ist gemeint, dass während des Brandversuchs weder Feuer noch Rauch den Brandraum verlassen dürfen.

Während des Brandes hat sich das organische PU-Material in der Zarge 1 teilweise zersetzt. Es haben sich gasförmige Bestandteile gebildet. Diese sind ca. 15 Minuten nach Versuchsbeginn durch den unteren Luftspalt 9 (Fig. 2) aus dem Brandraum entwichen und haben sich an der Luft entzündet. Des weiteren konnte man beobachten, dass sich das obere Ende der Zarge 1 verbogen hat. Es hat sich vom Mauerwerk 2 wegbewegt und einen weiteren Luftspalt oben gebildet. Durch diesen sind Rauchgase entwichen. Der organische PU-Schaum hatte sich soweit zersetzt, dass die Zarge 1 zum Teil hohl war. Zusammenfassend kann man festhalten, dass der Raumabschluss nicht gegeben war und darum der Brandversuch nicht bestanden wurde.

Zur Lösung des Problems wird eine Ausrüstung verwendet welche einfach in der Anwendung ist und mit der man die Brandschutzsicherheit einer Brandschutztürenanordnung sicherstellen kann, so dass zumindest über die Zarge keine brennbaren Spaltprodukte oder Rauch den Brandraum verlassen können. Die diesbezügliche Ausrüstung umfasst
- ein Intumeszenzmaterial zum Anbringen in der Zarge und/oder auf der Unterseite der Tür sowie ein aufschäumbares Füllmaterial zum Füllen der Zarge, alternativ kann für eine nicht erfindungsgemäße Ausführung eine Ausrüstung umfassen
- ein in einem Behälter aufgenommenes, aufschäumbares Brandschutzmaterial zum Füllen der Zarge, wobei das Brandschutzmaterial derart in dem Behälter aufgenommen ist, dass es beim Austragen aus dem Behälter formstabil aufgeschäumt wird.

Die erfindungsgemäße Variante hat den Vorteil, dass man die Zarge vergleichsweise einfach, schnell und kostengünstig mit einem Füllmaterial wie beispielsweise einem PU-Montageschaum füllen kann, wenn in der Zarge ein Intumeszenzmaterial angebracht wird, zumal das Intumeszenzmaterial im Brandfall sicherstellt, dass keine brennbaren Spaltprodukte, Feuer oder Rauch den Raum über einen allfällig entstehenden Spalt zwischen der Zarge und dem Mauerwerk verlassen können. Sofern auf der Unterseite der Tür ein Intumeszenzmaterial angebracht wird, kann dieses sicherstellen, dass über den zwischen der Unterseite der Tür und dem Boden bestehenden Luftspalt weder Rauch noch Feuer den Brandraum verlassen können, da sich das Intumeszenzmaterial unter Wärmeeinwirkung ausdehnt und den genannten Spalt abdichtet.

Als Intumeszenzmaterial zum Anbringen in der Zarge 1 und/oder auf der Unterseite der Tür wird ein Material vorgeschlagen, welches unter Wärmeeinwirkung sein Volumen schnell vergrößert oder aufschäumt. Beispielhaft wird expandierbarer Grafit, oder ein Material auf Basis Natriumsilikat wie Palusol (Marke der Firma BASF) als Intumeszenzmaterial genannt. Das Intumeszenzmaterial wird vorzugsweise umlaufend in der Zarge angebracht, d.h. sowohl in den beiden vertikal verlaufenden Seitenteilen wie auch in dem oberen, horizontal verlaufenden Teil der Zarge.

Bei der alternativen, nicht erfindungsgemäßen Variante umfasst die Ausrüstung ein in einem Behälter aufgenommenes, aufschäumbares Brandschutzmaterial, welches derart in dem Behälter aufgenommen ist, dass es beim Austragen aus dem Behälter formstabil aufgeschäumt wird. Damit kann die Zarge schnell und einfach gefüllt werden ohne dass zuvor ein Intumeszenzmaterial angebracht werden muss. Nach dem Austragen muss der Brandschutzschaum so feuerbeständig sein, dass durch die Zarge weder Feuer noch Rauch den Brandraum verlassen können.

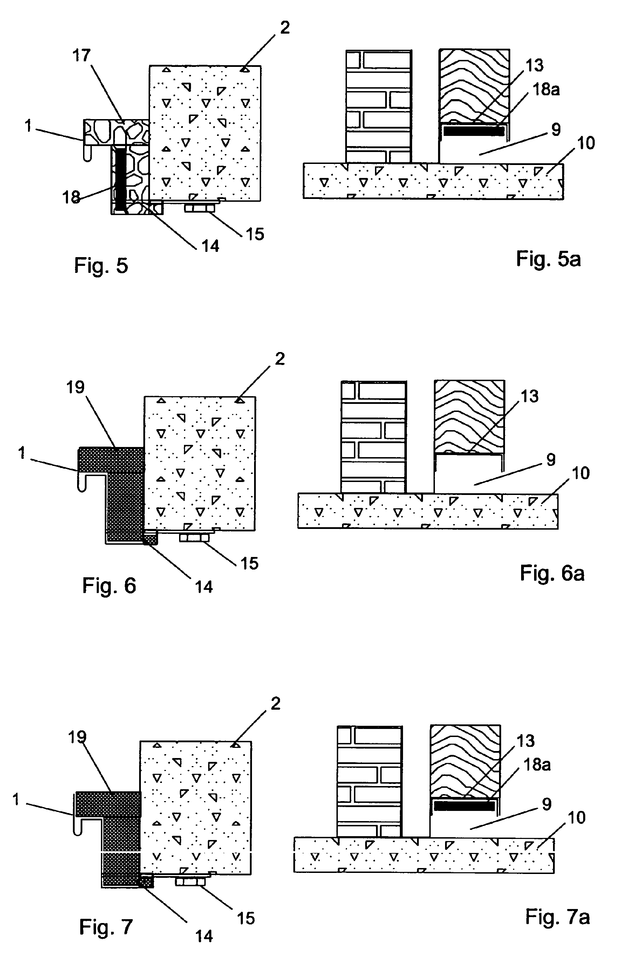

Die Figuren 5 und 5a zeigen mögliche Brandschutzmassnahmen an einer Brandschutztürenanordnung, gemäss dem Anspruch 1. Dabei zeigt die Fig. 5 einen Querschnitt durch das Mauerwerk 2 zusammen mit der Zarge 1 und die Fig. 5a einen Längsschnitt durch das Mauerwerk 2 sowie die Unterseite der Tür 3.

Die Zarge 1 ist mit einem Intumeszenzmaterial 18 versehen und mit einem herkömmlichen Schaum 17 ausgeschäumt. Auf der Unterseite der Tür 3 ist ebenfalls ein Intumeszenzmaterial 18a angeordnet.

Die Fig. 6 zeigt einen Querschnitt durch das Mauerwerk 2 zusammen mit der Zarge 1, während die Fig. 6a einen Längsschnitt durch die Unterseite der Tür 3 zeigt. Bei dieser Variante ist die Zarge 1 mit einem Brandschutzschaum 19 gefüllt. Auf der Unterseite der Tür 3 wurden keine zusätzlichen Brandschutzmassnahmen getroffen.

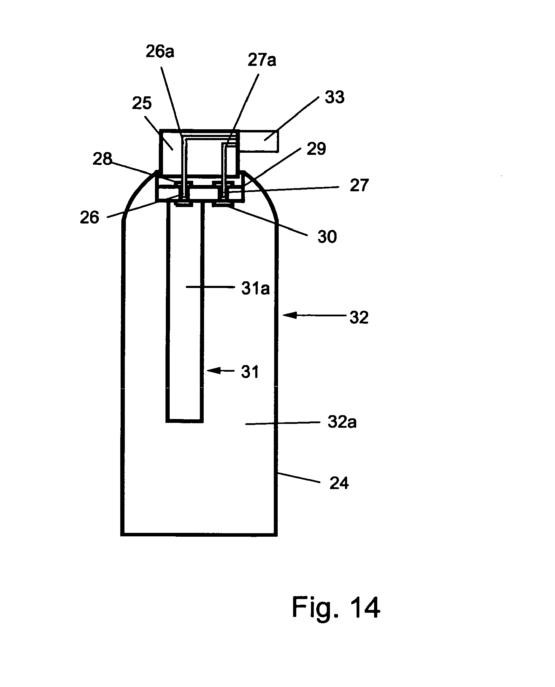

Bei dieser Alternative zur Erfindung kam eine Ausrüstung zum Einsatz, wobei das aufschäumbare Brandschutzmaterial vorzugsweise einer Dose entnommen wird, wie sie nachfolgend anhand der Fig. 14 noch näher erläutert wird. Der Brandschutzschaum muss dabei das Durchbrennen der Zarge verhindern und möglichst wenig brennbare Spaltprodukte bilden, die durch den unteren Türspalt 9 entweichen und sich entzünden könnten.

Die Fig. 7 zeigt wiederum einen Querschnitt durch das Mauerwerk 2 zusammen mit der Zarge 1, während die Fig. 7a einen Längsschnitt durch die Unterseite der Tür 3 zeigt. Bei dieser nicht erfindungsgemäßen Variante ist die Zarge 1 mit einem Brandschutzschaum 19 gefüllt und zusätzlich ist auf der Unterseite der Tür 3 das Intumeszenzmaterial 18a angebracht.

Fig. 8 zeigt einen Querschnitt durch die Unterseite der Tür, welche mit einem U-förmigen Abschluss 13 versehen ist, in den ein Streifen aus Intumeszenzmaterial 18a z.B. Blähgrafit von der Rolle eingeklebt ist. Dieser Streifen ist im hier dargestellten Ausgangszustand z.B. 30 mm breit und z.B. 2 mm dick. Ein Kleinbrandversuch hat ergeben, dass bereits nach 3,5 Minuten der 10 mm hohe Luftspalt 9 durch das sich ausdehnende Intumeszenzmaterial 18a verschlossen wurde. Es sind keine brennbaren Gase entwichen.

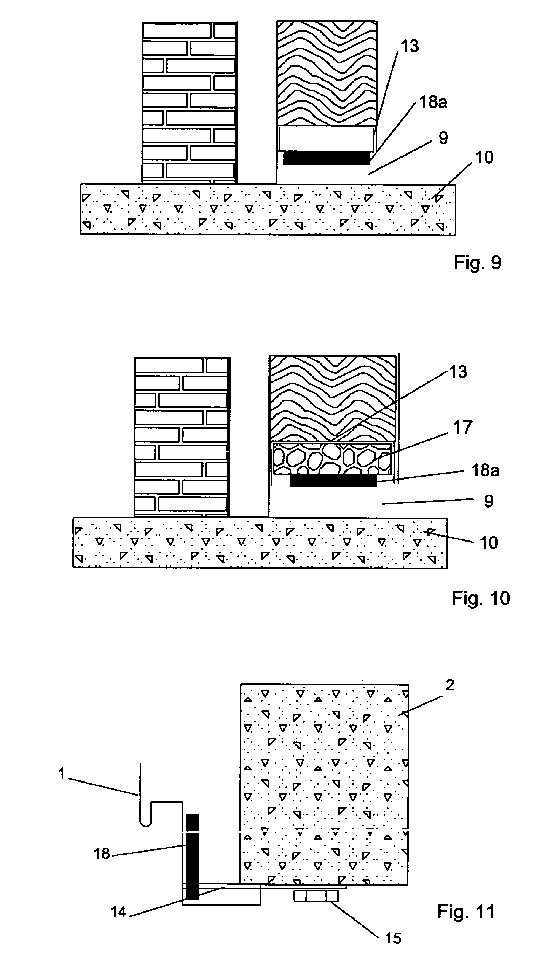

Fig. 9 zeigt eine Variante von Fig. 8. Das U-Profil ist nicht nach unten offen, dadurch entsteht ein anderer Abschluss 13. Jedenfalls ist auch hier auf der Türunterseite ein streifenförmiges Intumeszenzmaterial 18a angebracht.

Fig. 10 zeigt einen Abschluss 13 ähnlich zu Fig. 8. Das U-Profil ist sehr groß und darum genügt es nicht nur das Intumeszenzmaterial einzubauen. Gemäss einer weiteren Variante der Erfindung wird vorgeschlagen, das U-Profil mit z.B. PU-Montageschaum 17 auszuschäumen und auf der Unterseite wiederum ein Intumeszenzmaterial 18a anzubringen.

Fig. 11 zeigt die Zarge 1, in die das Intumeszenzmaterial 18 eingeklebt ist. Nach dem Einkleben des Intumeszenzmaterials 18 wird die Zarge mit einem herkömmlichen Montageschaum ausgeschäumt.

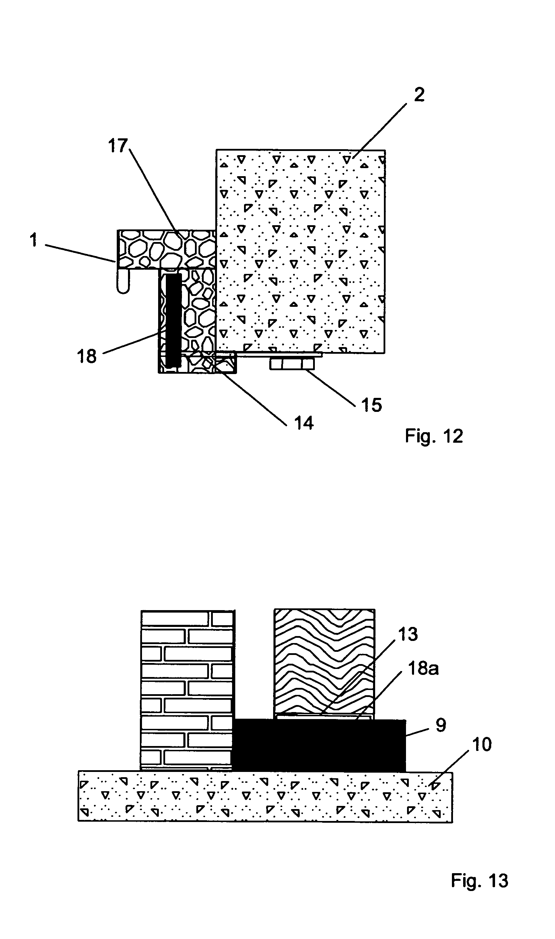

Fig. 12 zeigt die Zarge 1 mit eingeklebtem Intumeszenzmaterial 18 und ausgeschäumt mit PU-Schaum 17. Im Brandfall hat das Intumeszenzmaterial 18 genügend Zeit, um entstehende Hohlräume oder Luftspalte in der Zarge zu füllen.

Fig. 13 zeigt die Unterseite der Tür nach einem Brand. Wie ersichtlich, hat sich das Intumeszenzmaterial 18a unter der Wärmeeinwirkung dreidimensional ausgedehnt, so dass der Luftspalt unten 9 durch das Intumeszenzmaterial 18a vollständig verschlossen wird.

Schließlich zeigt Fig. 14 eine 2-K Dose, welchen nicht Teil der beanspruchten Erfindung ist, zur Aufnahme des schäumbaren Brandschutzmaterials. Die Dose ist mit zwei unabhängigen, mit unterschiedlichen Komponenten gefüllten Kammern 31 a, 32a versehen. Die erste Kammer 32a wird durch die eigentliche Hauptdose 32 gebildet, in welcher die erste, der Bildung des Brandschutzschaums dienende Komponente in flüssiger Form aufgenommen ist. Die zweite Kammer 31a wird durch einen Innenbehälter 31 gebildet, in dem die zweite, die Aushärtung des ausgetragenen Brandschutzschaums beschleunigende Komponente eingefüllt ist.

Diese zweite Komponente ist vorzugsweise ebenfalls flüssig. Jede Kammer 31 a, 32a der Aerosoldose ist mit einem verschließbaren, nach außen führenden Ausfließkanal 26, 27 verbunden.

Der Innenbehälter 31 ist an einem Ventilteller 29 festgeschraubt. Der Ventilteller 29 ist mit zwei Ventilkörpern 28, 30 versehen, die dem Verschließen des jeweiligen Kanals 26, 27 dienen. Der eine Ventilkörper 28 führt zum Innenbehälter 31, während der andere Ventilkörper 30 in die Hauptdose mündet. Sobald der Sprühkopf 25 der Aerosoldose nach unten gedrückt wird, werden die beiden Ventilkörper 28, 30 geöffnet und die beiden Teilfüllungen strömen durch die getrennten Kanäle 26a, 27a im Sprühkopf 25 in einen Stutzen 33, wo sie zusammengeführt werden. An diesem Stutzen 33 des Sprühkopfs 25 kann ein verlängertes Austragsrohr (nicht dargestellt) befestigt werden, welches ggf. mit Mischschikanen versehen ist, die ein Durchmischen der beiden Komponenten begünstigen.

Die erste Komponente zur Bildung des Brandschutzschaums ist in die Hauptdose 32 gemischt mit einem Treibgas mit einer kritischen Temperatur ≥ 70°C gefüllt. In den starren oder flexiblen Innenbehälter 31 ist die zweite Komponente mit oder ohne Treibgas gefüllt. Als erste Komponente ist beispielsweise eine Mischung aus Diphenylmethan-4,4'-diisocyanat, Tris(2-chlorisopropyl)-phosphat und mindestens ein Treibgas mit einer kritischen Temperatur ≥ 70°C in die Hauptdose abgefüllt. Die zweite, in den Innenbehälter 31 abgefüllte Komponente kann beispielsweise eine Mischung aus einem Polyol, Kaliumazetat und mindestens einem Treibgas mit einer kritischen Temperatur ≥ 70°C sein.

Zusammenfassend lässt sich festhalten, dass verschiedene Varianten von Brandschutzmassnahmen zum Ziel führen können. So kann die Zarge entweder voll- oder teilweise umlaufend mit einem Intumeszenzmaterial versehen und zusätzlich mit einem Füllmaterial, insbesondere einem Schaum auf der Basis von Polyurethan, Silikon, Silikat, Acryl oder einer Epoxid-Verbindung gefüllt oder gänzlich mit einem feuerfesten Brandschutzschaum ausgefüllt werden. Jedenfalls kann durch beide Maßnahmen sichergestellt werden, dass im Brandfall weder Feuer noch Rauch den Brandraum verlassen kann.

Sofern sich die Zarge unter Wärmeeinwirkung verbiegen könnte, sollte vorzugsweise die erfindungsgemäße Variante mit Intumeszenzmaterial gewählt werden, da das Intumeszenzmaterial einen allenfalls entstehenden Spalt zwischen Mauerwerk und Zarge ausfüllen könnte. Unabhängig von der an der Zarge realisierten Variante kann zusätzlich auch noch auf der Unterseite der Tür ein Intumeszenzmaterial angebracht werden. Ggf. sind natürlich auch Kombinationen möglich, indem beispielsweise ein Intumeszenzmaterial in die Zarge eingeklebt und letztere danach mit einem Brandschutzschaum gefüllt wird.

### Bezugszeichenliste

1 Zarge
2 Mauerwerk
3 Tür
3a Türblatt außen
3b Türblatt innen
4 Band
5 Schloss mit Drückergamitur
6 Schließmittel
7 lichte Durchgangshöhe
8 lichte Durchgangsbreite
9 Luftspalt unten
10 Boden
11 Luftspalt oben
12 Dämmung
13 Abschluss
14 Lasche
15 Schraube
16 Mörtel
17 PU-Schaum
18 Intumeszenzmaterial (Mauer) / 18a Intumeszenzmaterial (Tür)
19 Brandschutzschaum
24 Dose
25 Sprühkopf
26 / 26a Kanal
27 / 27a Kanal
28 Ventilkörper
29 Ventilteller
30 Ventilkörper
31 Innenbehälter / Kammer 31 a
32 Hauptdose / Kammer 32a
33 Stutzen

## Patentansprüche

1. Brandschutztürenanordnung umfassend eine Zarge (1) und eine schwenkbar daran gelagerte Tür (3), wobei in der Zarge (1) ein Intumeszenzmaterial (18) angebracht ist,
und dadruch gekennzeichnet, das
der in der Zarge (1) verbleibende Hohlraum bzw. die verbleibenden Hohlräume mit einem aufgeschäumten Füllmaterial (17) gefüllt ist/sind.

2. Brandschutztürenanordnung nach Anspruch 1, **dadurch gekennzeichnet, dass** umlaufend in der Zarge (1) ein Intumeszenzmaterial (18) ist.

3. Brandschutztürenanordnung nach Anspruch 1 oder 2, **dadurch gekennzeichnet, dass** das Intumeszenzmaterial (18) expandierbarer Grafit, Natriumsilikat oder Silikat ist.

4. Brandschutztürenanordnung nach einem der vorhergehenden Ansprüche, **dadurch gekennzeichnet, dass** das Intumeszenzmaterial (18, 18a) mechanisch oder mittels Klebstoff in der Zarge (1) befestigt ist.

5. Brandschutztürenanordnung nach einem der vorhergehenden Ansprüche, **dadurch gekennzeichnet, dass** das Intumeszenzmaterial (18) schaumartig ist.

6. Brandschutztürenanordnungnach einem der vorhergehenden Ansprüche, **dadurch gekennzeichnet, dass** die Zarge (1) mit einem Füllmaterial (17) auf der Basis eines organischen Polyurethan-Schaums, eines 2K-Polyurethanschaums, eines Sitikonschaums, eines Silikatschaums, eines Acrylschaums oder eines Epoxidschaums gefüllt ist.

7. Brandschutztürenanordnung nach einem der vorhergehenden Ansprüche, **dadurch gekennzeichnet, dass** zusätzlich auf der Unterseite der Tür (3) ein Intumeszenzmaterial (18a) angebracht ist.

## Claims

1. A fire door assembly comprising a frame (1) and hinged thereto a door (3) wherein an intumescent material (18) is provided in the frame (1)
and **characterized in that**
the cavity/cavities remaining in the frame (1) is/are filled with a foamed filler material (17).

2. The fire door assembly as set forth in claim 1, **characterized in that** provided surrounding in the frame (1) is an intumescent material (18).

3. The fire door assembly as set forth in claim 1 or 2, **characterized in that** said intumescent material (18) is expandable graphite, sodium silicate or silicate.

4. The fire door assembly as set forth in any of the preceding claims, **characterized in that** said intumescent material (18) is secured mechanically or by means of an adhesive to the frame (1).

5. The fire door assembly as set forth in any of the preceding claims, **characterized in that** said intumescent material (18) is foamlike.

6. The fire door assembly as set forth in any of the preceding claims, **characterized in that** said frame (1) is filled with a filler material (17) on the basis of an organic polyurethane foam, a 2K polyurethane foam, a silicone foam, a silicate foam, an acryl foam or an epoxide foam.

7. The fire door assembly as set forth in any of the preceding claims, **characterized in that** applied additionally to the underside of the door (3) is an intumescent material (18a).

## Revendications

1. Agencement de porte coupe-feu comprenant un châssis (1) et une porte logée dessus de manière à pouvoir pivoter (3), un matériau intumescent (18) étant placé dans le châssis (1), **caractérisé en ce que**
l'espace creux ou les espaces creux restant dans le châssis (1) sont remplis d'un matériau de remplissage (17) expansé.

2. Agencement de porte coupe-feu selon la revendication 1, **caractérisé en ce qu'**un matériau intumescent (18) est sur la périphérie dans le châssis (1).

3. Agencement de porte coupe-feu selon la revendication 1 ou 2, **caractérisé en ce que** le matériau intumescent (18) est du graphite, du silicate de sodium ou du silicate expansible.

4. Agencement de porte coupe-feu selon l'une quelconque des revendications précédentes, **caractérisé en ce que** le matériau intumescent (18, 18a) est fixé mécaniquement ou au moyen d'un adhésif dans le châssis (1).

5. Agencement de porte coupe-feu selon l'une quelconque des revendications précédentes, **caractérisé en ce que** le matériau intumescent (18) est de type mousse.

6. Agencement de porte coupe-feu selon l'une quelconque des revendications précédentes, **caractérisé en ce que** le châssis (1) est rempli par un matériau de remplissage' (17) sur la base d'une mousse de polyuréthane organique, d'une mousse de polyuréthane à 2 composants, d'une mousse de silicone, d'une mousse de silicate, d'une mousse acrylique ou d'une mousse époxy.

7. Agencement de porte coupe-feu selon l'une quelconque des revendications précédentes, **caractérisé en ce qu'**un matériau intumescent (18a) est placé en outre sur le côté inférieur de la porte (3).
